# DEMANDE DE BREVET EUROPEEN

(11) **EP 2 469 068 A1**
(43) Date de publication de la demande: **27.06.2012**
(21) Numéro de dépôt: 11193145.7
(22) Date de dépôt: 13.12.2011
(51) Int. Cl.: F02M 35/10, F02B 29/04

(54) **Carter pour module d'admission, notamment pour module d'admission de moteur thermique de véhicule automobile, et module d'admission comprenant un tel carter**

(30) Priorité: 22.12.2010 FR 1005047
(71) Demandeur: Valeo Systèmes Thermiques, 78320 Le Mesnil-Saint-Denis (FR)
(72) Inventeur: Martins, Carlos, 78150 Le Chesnay (FR)
(74) Mandataire: Metz, Gaëlle

(57) **Abrégé**

L'invention concerne un carter pour module d'admission, notamment pour module d'admission de moteur thermique de véhicule automobile, ledit carter comprenant un boîtier (2), apte à accueillir un faisceau d'échange de chaleur (3), et un couvercle (4), fermant ledit boîtier (2).

Selon l'invention, ledit boîtier (2) est muni d'une première entrée (20) pour des gaz d'admission et le couvercle (4) est muni d'une autre entrée (22) pour lesdits gaz d'admission, ledit carter étant configuré pour que les gaz d'admission pénétrant dans le boîtier (2) par l'une desdites entrées (20), dite entrée pour les gaz d'admission à refroidir, traverse le faisceau (3) tandis que les gaz d'admission pénétrant par l'autre entrée (22), dite entrée pour les gaz d'admission non-refroidis, ressortent du carter en évitant le faisceau (3).

L'invention concerne aussi un module d'admission comprenant un tel carter (1).

## Description

La présente invention concerne un carter pour module d'admission, notamment pour module d'admission de moteur thermique de véhicule automobile, et un module d'admission comprenant un tel carter.

Un moteur thermique de véhicule automobile comporte une chambre de combustion, généralement formée par une pluralité de cylindres, dans laquelle un mélange d'air et de carburant est brûlé pour générer le travail du moteur. Les gaz admis dans la chambre de combustion, qui comprennent l'air, sont dénommés gaz d'admission.

Dans le cas de moteurs suralimentés, c'est-à-dire alimentés en air préalablement comprimé, ces gaz d'admission doivent être refroidis avant d'être introduits dans la chambre de combustion. Cette fonction est remplie par un échangeur de chaleur, appelé généralement refroidisseur d'air de suralimentation.

Dans certaines phases de fonctionnement du moteur, il est cependant nécessaire d'éviter un refroidissement des gaz d'admission. Il a ainsi déjà été proposé des circuits faisant by-pass et permettant aux gaz d'admission de ne pas passer par l'échangeur avant leur introduction dans le moteur.

Afin de réduire les émissions polluantes, il est également connu d'introduire dans le flux de gaz d'admission des gaz d'échappement dits "recirculés". Il s'agit de gaz d'échappement prélevés en aval de la chambre de combustion pour être réacheminés (recirculés) vers le flux de gaz d'admission, en amont de la chambre de combustion.

Cela étant, il peut être souhaitable de rapprocher au plus près le refroidisseur d'air de suralimentation du moteur en utilisant un collecteur de répartition par lequel le refroidisseur d'air de suralimentation est raccordée au moteur. Le refroidisseur débouche dans le collecteur qui est assujetti à la culasse du moteur et qui distribue les gaz d'admission en direction des cylindres par des conduits d'admission prévus dans la culasse. On parle alors de modules d'admission.

De nombreux modules ont déjà été proposés. Un besoin demeure cependant d'un module présentant une structure simplifiée tout en restant capable de gérer les différents flux de gaz d'admission. Un tel module doit par ailleurs permettre de limiter les pertes de charges et présenter un encombrement réduit.

L'invention propose de résoudre les problèmes précités et concerne à cette fin un carter pour module d'admission, notamment pour module d'admission de moteur thermique de véhicule automobile, ledit carter comprenant un boîtier, apte à accueillir un faisceau d'échange de chaleur, et un couvercle, fermant ledit boîtier.

Selon l'invention, ledit boîtier est muni d'une première entrée pour des gaz d'admission et le couvercle est muni d'une autre entrée pour lesdits gaz d'admission, ledit carter étant configuré pour que les gaz d'admission pénétrant dans le boîtier par l'une desdites entrées, dite entrée pour les gaz d'admission à refroidir, traverse le faisceau tandis que les gaz d'admission pénétrant par l'autre entrée, dite entrée pour les gaz d'admission non-refroidis, ressortent du carter en évitant le faisceau.

En limitant le nombre de pièces du carter, on dispose ainsi d'un module d'admission simple à fabriquer. En prévoyant l'une des entrées des gaz d'admission sur le boîtier et l'autre sur le couvercle, on facilite en outre leur implantation.

Selon un aspect de l'invention, le boîtier comprend une boîte d'entrée des gaz d'admission à refroidir débouchant du côté d'une face latérale du boitier, dite face de raccordement, sur l'entrée pour les gaz d'admission à refroidir.

L'entrée pour les gaz non-refroidis est alors située, par exemple, au droit de ladite face de raccordement. On dispose de la sorte d'une solution permettant de placer une ou des vannes doseuses des gaz d'admission non-refroidis dans l'encombrement du carter, dans le sens de l'écoulement des gaz d'admission à travers le faisceau.

Selon d'autres aspects de l'invention, pris ensemble ou séparément :
- le boîtier comprend une boîte de sortie pour les gaz d'admission et le couvercle comprend un conduit mettant en communication l'entrée pour les gaz non refroidis et la boîte de sortie,
- ledit conduit est muni d'une entrée pour des gaz d'échappement recirculés,
- le conduit comprend une section de répartition, ladite section de répartition s'étendant en regard de la boîte de sortie,
- la boîte de sortie comprend des orifices de sortie des gaz d'admission et la section de répartition s'étend au moins en regard desdits orifices de sortie,
- le conduit comprend une section d'alimentation reliant ladite section de répartition et l'entrée pour les gaz d'admission non refroidis,
- ladite section d'alimentation débouche dans ladite section de distribution au niveau d'une zone médiane de cette dernière,
- l'entrée pour les gaz d'échappement recirculés débouche sur ladite section d'alimentation,
- ledit couvercle comprend une paroi fermant ledit boîtier et ledit conduit est issu de matière de ladite paroi,
- le contour de ladite section d'alimentation du conduit est apte à être fermé par une plaque terminale du faisceau de l'échangeur destinée à venir en appui contre ladite paroi.

L'invention concerne aussi un module d'admission comprenant un carter tel que décrit plus haut et un faisceau d'échange de chaleur situé dans ledit boîtier du carter.

Ledit module pourra comprendre en outre une ou des vannes doseuses du débit de gaz d'admission en communication avec l'entrée pour les gaz d'admission à refroidir et/ou l'entrée pour les gaz d'admission non refroidis.

Il pourra aussi comprendre :
- une tubulure d'extension montée entre le carter et la ou les vannes doseuses, et/ou
- une tubulure d'admission des gaz d'échappement recirculés montée sur ledit carter.

L'invention sera mieux comprise à la lumière de la description suivante qui n'est donnée qu'à titre indicatif et qui n'a pas pour but de la limiter, accompagnée des dessins joints parmi lesquels :
- la figure 1 est une vue éclatée, en perspective, d'un un exemple de module d'admission conforme à l'invention,
- la figure 2 est une vue de dessus du module de la figure 1,
- la figure 3 est une vue de coupe selon la ligne III-III de la figure 2,
- la figure 4 est une vue de coupe selon la ligne IV-IV de la figure 2,
- la figure 5 est une vue de dessous du couvercle du module de la figure 1.

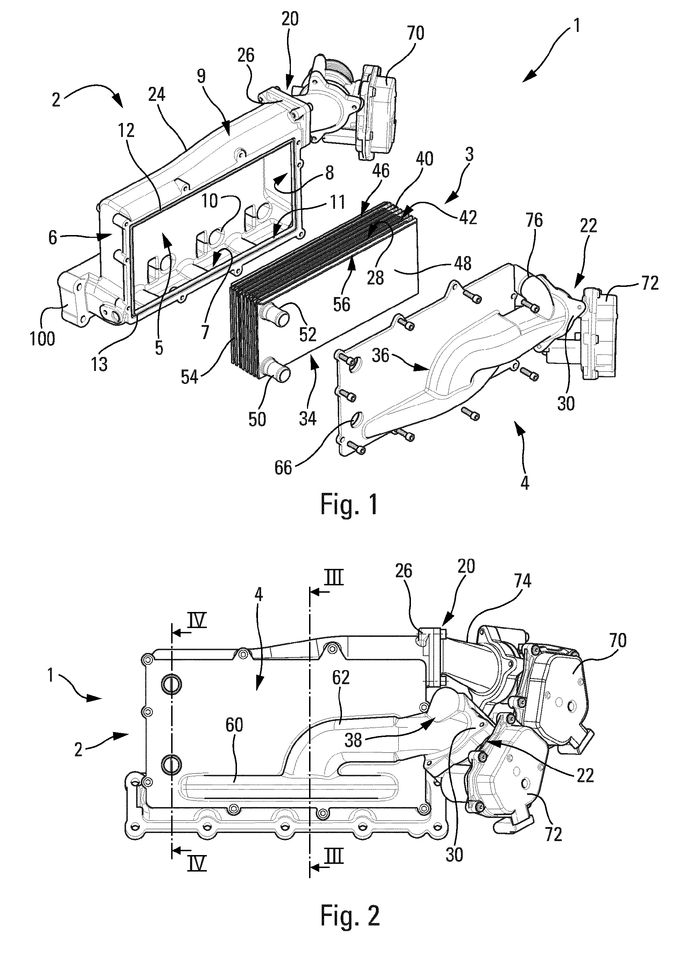

Comme illustré aux figures 1 et 2, l'invention concerne tout d'abord un carter 1 pour module d'admission, notamment pour module d'admission de moteur thermique de véhicule automobile.

Ledit carter comprenant un boîtier 2, apte à accueillir un faisceau d'échange de chaleur 3, et un couvercle 4, fermant ledit boîtier 2.

Le boîtier 2 présente, par exemple une forme sensiblement parallélépipédique avec une paroi de fond 5, et quatre parois latérales 6, 7, 8, 9. La paroi de fond 5 est munie, notamment, d'orifices 10 de sortie des gaz d'admission. Ils sont, par exemple, groupés par paire, chaque paire étant destinée à être raccordée aux conduits d'admission de la culasse du moteur communiquant avec l'un des cylindres de ce dernier. Dans chaque paire, l'un des orifices est de section sensiblement circulaire et l'autre de section sensiblement rectangulaire.

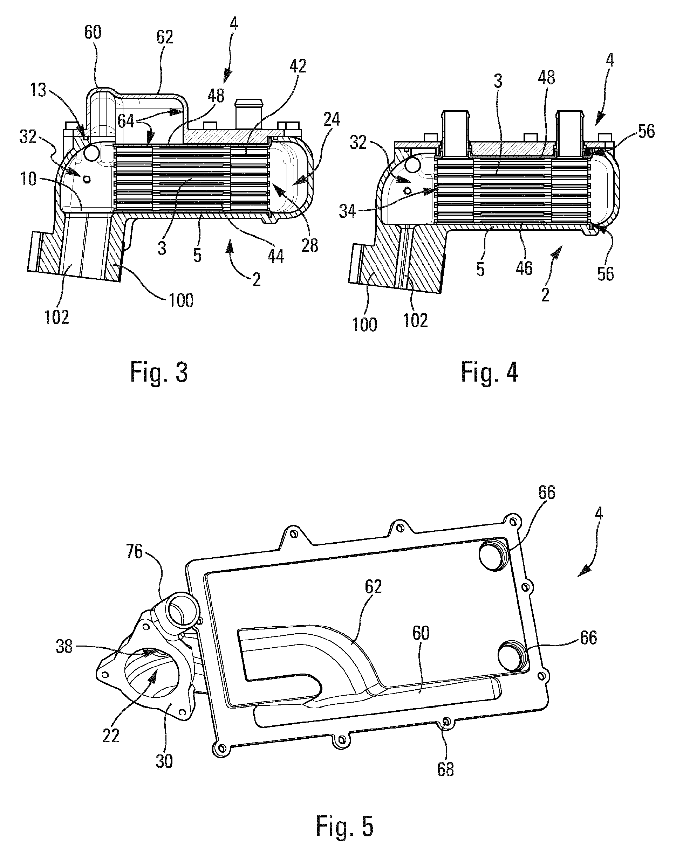

Ledit boîtier 2 pourra être munie d'une embase 100 dans laquelle des pipes d'admission 102 (visibles figures 3 et 4) prévues en regard desdits orifices de sortie 10 sont réalisées pour mettre ces derniers en communication avec les conduits d'admission de la culasse. Ledit carter, en particulier ledit boîtier 2, est configuré de façon à pouvoir être fixé à la culasse du moteur, notamment par l'intermédiaire de ladite embase 100.

Le boîtier 2 présente également une ouverture 11, située en regard de la paroi de fond 5, pour l'introduction du faisceau d'échange de chaleur 3. Ledit boîtier comprend, par exemple, une bride 12 bordant ladite ouverture 11. Ladite bride 12 présente une gorge 13, apte à loger un joint, non représenté, destiné à faire étanchéité entre ledit boîtier 2 et le couvercle 4.

Le faisceau d'échange de chaleur 3 permet un échange de chaleur entre un premier fluide, ici les gaz d'admission à refroidir, avec un second fluide qui pourra être un liquide de refroidissement, notamment un liquide antigel tel qu'un mélange d'eau et de glycol. Le second fluide provient, par exemple, d'un circuit de refroidissement dit basse température du véhicule.

Dans le mode de réalisation illustré, le faisceau d'échange de chaleur 3 comporte un empilement de plaques 40 parallèles entre elles.

Les plaques 40 sont, par exemple, de forme générale rectangulaire avec deux grands cotés et deux petits cotés et sont disposées par paires. Les plaques 40 pourront, par exemple, être des plaques embouties.

L'espace aménagé entre deux plaques 40 prévues en vis-à-vis de deux paires de plaques 40 voisines permet de définir des premiers canaux 42 pour la circulation du premier fluide, qui est ici, pour rappel, le gaz d'admission à refroidir.

Des intercalaires ondulés, non visibles, pourront être disposés à chaque fois dans les premiers canaux 42. Ils sont brasés aux plaques 40 et ont pour fonction de perturber les gaz d'admission à refroidir de manière à ce que celui-ci échange plus de chaleur avec le second fluide.

L'espacement entre les deux plaques 40 formant une paire de plaques permet de définir un second canal 44 (visible aux figures 3 et 4) pour la circulation du second fluide. Autrement dit, le faisceau d'échange de chaleur 3 comporte un empilement de plaques 40 déterminant des premiers canaux 42 pour la circulation d'un premier fluide et des seconds canaux 44 pour la circulation d'un second fluide. Lesdites plaques 40 pourront être munies de bords relevés 54, le long des côtés des plaques parallèles au flux de gaz d'admission à refroidir dans le faisceau.

Le faisceau 3 d'échange de chaleur pourra en outre comporter deux plaques d'extrémité respectivement appelées première 46 et deuxième 48 plaques d'extrémité.

Une fois le faisceau d'échange de chaleur 3 monté dans le boîtier 2, la première plaque d'extrémité 46 est en contact avec la paroi de fond 5 et/ou la deuxième plaque d'extrémité 48 est en contact avec le couvercle 4. Lesdites plaques d'extrémité pourront aussi comprendre des bords rabattus 56, prévus le long de l'un côté desdites plaques orthogonale à la direction du flux de gaz d'admission à refroidir dans le faisceau. Lesdits bords rabattus 56 renforce l'étanchéité et facilite le positionnement du faisceau dans le boîtier 2.

Le faisceau 3 comporte aussi, par exemple, des tubulures 50 et 52, notamment prévues au niveau de la deuxième plaque d'extrémité 48. Ces tubulures servent, ici, respectivement d'entrée et de sortie pour le second fluide.

Selon l'invention, ledit boîtier 2 est muni d'une première entrée 20 pour les gaz d'admission et le couvercle 4 est muni d'une autre entrée 22 pour lesdits gaz d'admission. Ledit carter 1 est configuré pour que les gaz d'admission pénétrant dans le boîtier 2 par l'une 20 desdites entrées, dite entrée pour les gaz d'admission à refroidir, traverse le faisceau 3 tandis que les gaz d'admission pénétrant par l'autre entrée 22, dite entrée pour les gaz d'admission non-refroidis, ressortent du carter 1 en évitant le faisceau.

Le boîtier 2 comprend, par exemple, une boîte d'entrée 24 des gaz d'admission à refroidir débouchant du côté d'une 8 des faces latérales de du boitier 2, dite face de raccordement, sur l'entrée 20 pour les gaz d'admission à refroidir. Elle pourra être munie à ce niveau d'une bride de raccordement 26 se trouvant sensiblement dans le plan de la paroi de raccordement 8.

La boîte d'entrée 24 est délimitée, par exemple, par l'une 9 des parois latérales du boîtier, présentant une section en U. Ladite boîte d'entrée 24 présente, notamment, une forme évasée de section allant en diminuant depuis l'entrée 20 pour les gaz à refroidir jusqu'à l'extrémité longitudinale opposée. Elle débouche sur une face d'entrée 28 de l'échangeur.

L'entrée 22 pour les gaz non-refroidis est située, par exemple au droit de ladite face de raccordement 8. Elle pourra elle aussi être munie d'une bride de raccordement 30.

Le boîtier 2 comprend, par exemple, une boîte de sortie 32 (mieux visibles aux figures 3 et 4) pour les gaz d'admission dans laquelle débouche les gaz d'admission à refroidir ayant traversés le faisceau 3, par une face de sortie 34 de celui-ci. Ladite boîte de sortie 32 est délimitée, par exemple, par une partie de la paroi de fond 5, une partie de la paroi de raccordement 8, une partie de la paroi opposé 6 du boîtier, la paroi latérale opposée restante 7 et une partie du couvercle 4. Les orifices de sortie 10 sont prévus au niveau de ladite boîte de sortie 32. Autrement dit, ladite boîte de sortie 32 forme un collecteur de répartition des gaz d'admission dans la culasse.

Le couvercle pourra comprendre un conduit 36 mettant en communication l'entrée pour les gaz non refroidis 22 et la boîte de sortie 32.

Selon un aspect de l'invention, ledit conduit 36 est muni d'une entrée 38 pour des gaz d'échappement recirculés. On utilise ainsi la même voie d'introduction dans la boîte de sortie pour les gaz d'admission non refroidis et les gaz d'échappement recirculés.

Le conduit 36 comprend une section de répartition 60, ladite section de répartition s'étendant en regard de la boîte de sortie 32, par exemple en regard desdits orifices de sortie 10. Il pourra aussi comprendre une section d'alimentation 62 reliant ladite section de répartition 60 et l'entrée pour les gaz d'admission non refroidis 22.

Ladite section d'alimentation 62 débouche dans ladite section de distribution 60, notamment, au niveau d'une zone médiane de cette dernière, selon sa direction d'extension longitudinale.

L'entrée 38 pour les gaz d'échappement recirculés est prévue, par exemple, au niveau de ladite section d'alimentation 62, notamment à proximité de la bride de raccordement 30 de l'entrée pour les gaz d'admission non-refroidis.

Comme illustré à la figure 3, ledit couvercle 4 comprend une paroi fermant ledit boîtier 2 et ledit conduit 36 est issu de matière de ladite paroi.

Selon un aspect de l'invention, le contour 64 de ladite section d'alimentation 62 du conduit est apte à être fermé par la plaque d'extrémité 48 du faisceau de l'échangeur destinée à venir en appui contre ladite paroi du couvercle 4.

Comme illustré à la figure 5, le couvercle pourra également être muni d'orifices 66 pour le passage des tubulures 50, 52 du faisceau. Il pourra encore être pourvu d'orifices 68 pour sa fixation sur le boîtier 2.

Si l'on reporte à nouveau aux figures 1 et 2, on constate que l'invention concerne également un module d'admission. Ce dernier comprend un carter 1 et un faisceau d'échange de chaleur 3, tels que décrit plus haut.

Le module pourra comporter en outre :
- une vanne doseuse 70, 72 du débit de gaz d'admission en communication avec l'entrée pour les gaz d'admission à refroidir et/ou l'entrée pour les gaz d'admission non refroidis,
- une tubulure d'extension 74 montée entre la boîte d'entrée 24 et la vanne doseuse 70 associée, et/ou
- une tubulure 76 d'admission des gaz d'échappement reciculés, montée sur ledit carter, notamment au niveau de ladite section d'alimentation 62.

Le faisceau d'échange de chaleur est réalisé, par exemple, en aluminium et/ou alliage d'aluminium.

Le boîtier et le carter sont, par exemple, des pièces de fonderie, par exemple en aluminium et/ou alliage d'aluminium. On pourrait aussi envisager un boîtier en plastique, voir même un boîtier en plastique et un couvercle en aluminium.

## Revendications

1. Carter pour module d'admission, notamment pour module d'admission de moteur thermique de véhicule automobile, ledit carter comprenant un boîtier (2), apte à accueillir un faisceau d'échange de chaleur (3), et un couvercle (4), fermant ledit boîtier (2) **caractérisé en ce que** ledit boîtier (2) est muni d'une première entrée (20) pour des gaz d'admission et le couvercle (4) est muni d'une autre entrée (22) pour lesdits gaz d'admission, ledit carter étant configuré pour que les gaz d'admission pénétrant dans le boîtier (2) par l'une desdites entrées (20), dite entrée pour les gaz d'admission à refroidir, traverse le faisceau (3) tandis que les gaz d'admission pénétrant par l'autre entrée (22), dite entrée pour les gaz d'admission non-refroidis, ressortent du carter en évitant le faisceau (3).

2. Carter selon la revendication 1 dans lequel le boîtier (2) comprend une boîte d'entrée (24) des gaz d'admission à refroidir débouchant du côté d'une face latérale (8) du boîtier (2), dite face de raccordement, sur l'entrée (20) pour les gaz d'admission à refroidir.

3. Carter selon la revendication 2 dans lequel l'entrée (22) pour les gaz non-refroidis est située au droit de ladite face de raccordement (8).

4. Carter selon l'une quelconque des revendications précédentes dans lequel le boîtier (2) comprend une boîte de sortie (32) pour les gaz d'admission et le couvercle (4) comprend un conduit (36) mettant en communication l'entrée (22) pour les gaz non refroidis et la boîte de sortie (32).

5. Carter selon la revendication 4 dans lequel ledit conduit (36) est muni d'une entrée (38) pour des gaz d'échappement recirculés.

6. Carter selon la revendication 5 dans lequel le conduit (36) comprend une section de répartition (60), ladite section de répartition (60) s'étendant en regard de la boîte de sortie (32).

7. Carter selon la revendication 6 dans lequel la boîte de sortie (34) comprend des orifices de sortie des gaz d'admission (10) et la section de répartition (60) s'étend au moins en regard desdits orifices de sortie (10).

8. Carter selon l'une quelconque des revendications 6 ou 7 dans lequel le conduit (36) comprend une section d'alimentation (62) reliant ladite section de répartition (60) et l'entrée (22) pour les gaz d'admission non refroidis.

9. Carter selon la revendication 8 dans lequel ladite section d'alimentation (62) débouche dans ladite section de distribution (60) au niveau d'une zone médiane de cette dernière.

10. Carter selon l'une quelconque des revendications 8 ou 9 dans lequel l'entrée (38) pour les gaz d'échappement recirculés débouche sur ladite section d'alimentation (62).

11. Carter selon l'une quelconque des revendications 8 à 11 dans lequel ledit couvercle (4) comprend une paroi fermant ledit boîtier (2) et ledit conduit (36) est issu de matière de ladite paroi.

12. Carter selon la revendication 11 dans lequel le contour de ladite section d'alimentation (62) du conduit (36) est apte à être fermé par une plaque terminale (48) du faisceau (3) de l'échangeur, destinée à venir en appui contre ladite paroi.

13. Module d'admission comprenant un carter (1) selon l'une quelconque des revendications précédentes et un faisceau d'échange de chaleur (3) situé dans ledit boîtier (2).

14. Module selon revendication 13 comprenant en outre une ou des vannes (70, 72) doseuses du débit de gaz d'admission en communication avec l'entrée (20) pour les gaz d'admission à refroidir et/ou l'entrée (22) pour les gaz d'admission non refroidis.

15. Module selon la revendication 14 comprenant une tubulure d'extension (74), montée entre le carter (1) et la ou les vannes doseuses (70, 72), et/ou une tubulure d'admission (76) des gaz d'échappement reciculés, montée sur ledit carter (1).
